# EUROPEAN PATENT APPLICATION

(11) **EP 0 611 518 A1**
(43) Date of publication of application: **24.08.1994**
(21) Application number: 92920901.3
(22) Date of filing: 02.10.1992
(51) Int. Cl.: A01C 11/02

(54) **SYSTEM FOR SEPARATING LINED-UP SEEDLING**

(30) Priority: 04.10.1991 JP 285632/91
(71) Applicant: HOKUEI CO., LTD., Hokkaido 065 (JP)
(72) Inventor: SASAKI, Takashi, Ebetsu-shi, Hokkaido 069 (JP); KITAGUCHI, Shoichi, Ishikari-gun, Hokkaido 068-11 (JP)
(74) Representative: Oppermann, Ewald, Dipl.-Ing.
(86) International application number: JP9201283
(87) International publication number: WO9306707

(57) **Abstract**

A system for separating lined-up seedlings, which separates an individual seedling from lined-up seedlings in a transplanting machine using the lined-up seedlings such as seedlings each contained in a paper tube, by use of paper-tube containers for growing the seedlings orderly connected with one another so as to be separable to provide individual seedlings in a transplantation culture of crops, characterized in that said system comprises: a first seedling moving mechanism (10) mounted thereon with the lined-up seedlings (P) orderly connected with one another so as to be separable into individual seedlings and reciprocatingly movable in one direction; a second seedling moving mechanism (20) provided on the first seedling moving mechanism (10) and intermittently movable in a direction perpendicularly intersecting the moving direction of the first seedling moving mechanism (10) at a moving end of the first seedling moving mechanism (10), for delivering one line of the lined-up seedlings (P) at a time; and a pair of rotors for separation (31, 32) positioned in front of the moving direction of the second seedling moving mechanism (20) and opposed to the foremost line of the delivered lined-up seedlings, whereby one (31) of the rotors for separation comes into abutting contact with a foremost seedling (Pa), is forwardly rotated with respect to the moving direction of seedlings by the first seedling moving mechanism (10) and is rotated at a circumferential speed higher than the moving speed of the first seedling moving mechanism (10), while, the other (32) of the rotors for separation is reversely rotated with respect to the moving direction of seedlings and is positioned close to the side of the succeeding line of the seedlings.

## Description

### Technical Field

The present invention relates to an apparatus for separating arranged nursery plants into an individual plant in a transplanter using arranged nursery plants such as paper cylindrical nursery plants orderly connected to be separatable into the individual plant in the a paper cylindrical nursery cabinet in a transplanting culture of agricultural products.

### Prior Art

In an apparatus for automatically separating the arranged nursery plants like paper cylinder into an individual plant, there has been tried that a needle material is stuck into the paper cylindrical nursery cabinet to separate the arranged nursery plants into each plant. However, such an apparatus has not been completed yet.

In Japanese Patent Application KOKAI Publication No. 63-50962, there is proposed a separating apparatus using a plurality of rolls rotating to press on the front surface of a plant to be separated from the arranged nursery plants.

In the above conventional apparatus in which the needle material is stuck into the paper cylindrical nursery cabinet to separate the arranged nursery plants into each plant, paper forming the paper cylindrical nursery cabinet is rotted during the period of raising of seedling, and its strength is lowered. As a result, paper is broken, a separation mistake occurs. Then, the residual plants are an obstacle to a next separation. Due to this, there was a case that the separation mistake continuously occurs.

Moreover, in the above separating apparatus using a plurality of rolls rotating to press on the front surface of a plant to be separated from the arranged nursery plants, one separation roll corresponds to one plant to be separated. After raising of seedling, the connecting strength of the paper cylindrical nursery cabinet is not fixed by the degree of rotting paper and amount of water. Moreover, since the plant to be separated is peeled from the connecting section with the continuous plant array, the plant to be separated is not individually separated, and the separation is performed in a mass of two or three plants. Due to this, there was a case that the separation become uncertain.

In order to solve the above problems, and surely separate the arranged plants into an individual plant, an object of the present invention is to provide an apparatus having a high performance and a high efficiency in which the arranged nursery plants can be consciously and surely separated into an individual plant, and a transplanting culture can be considerably expanded.

### Disclosure of the Invention

According to an apparatus for separating arranged nursery plants of the present invention, in an apparatus in which arranged nursery plants P, which are orderly separatable into each plant Pb, are moved to be supplied to a separation rotator, thereby separating the arranged plants into each plant Pb, there are provided a first rotator 31 being in contact with a side surface of the movement of a plant Pa to be separated from the arranged nursery plants P, and a second rotator 32 ahead in a moving direction Mc of the plant Pa to be separated from the arranged plants P. The surface being in contact with the arranged plants P of the first rotator 31 is positively rotated in a moving direction Mc of the plant Pa to be separated, and a speed of the surface being in contact with the arranged plants P of the first rotator 31 is made faster than the moving speed of the arranged plants P. The second rotator 32 is set to be rotated in an opposite to the first rotator 31, and the front surface of the movement of the plant Pa being not separated by the first rotator 31 is in contact with the second rotator 32, and the plant Pa is separated from the arranged plant P.

According to the present invention, there is provided the first rotator 31 being in contact with the side surface of the movement of the plant Pa to be separated from the arranged nursery plants P. The surface being in contact with the arranged plants P of the first rotator 31 is positively rotated in the moving direction Mc of the plant Pa to be separated, and the speed of the surface being in contact with the arranged plants P of the first rotator 31 is made faster than the moving speed of the arranged plants P. Thereby, the plant Pa to be separated is rotated by the first rotator 31, and moved at a higher speed than the moving speed of the arranged plants P, so that the plant Pa is separated from the arranged plants P.

Also, according to the present invention, there is provided the second rotator 32 ahead in the moving direction Mc of the plant Pa to be separated from the arranged plants P. The second rotator 32 is set to be rotated in an opposite to the first rotator 31, and the front surface of the movement of the plant Pa being not separated by the first rotator 31 is in contact with the second rotator 32, and the plant Pa is separated from the arranged plant P. Thereby, the plant Pa being not separated by the first rotator 31 is rotated by the rotator 31 in the opposite direction to the first rotator 31, so that the plant Pa is separated from the arranged plants P.

### Brief Description of the Drawings

FIG. 1 is a plane view showing one embodiment of an apparatus for separating arranged plants of the present invention;
FIG. 2 is a front view of FIG. 1;
FIG. 3 is a side view of FIG. 1;
FIG. 4 is a partially enlarged view in which a part of FIG. 1 is cut, to show an operation state;

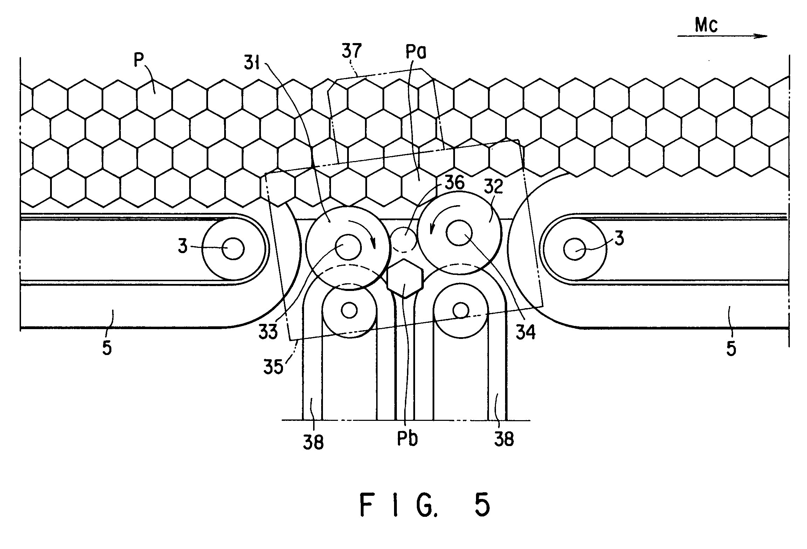

FIG. 5 is also a partially enlarged view in which a part of FIG. 1 is cut, to show an operation state; and

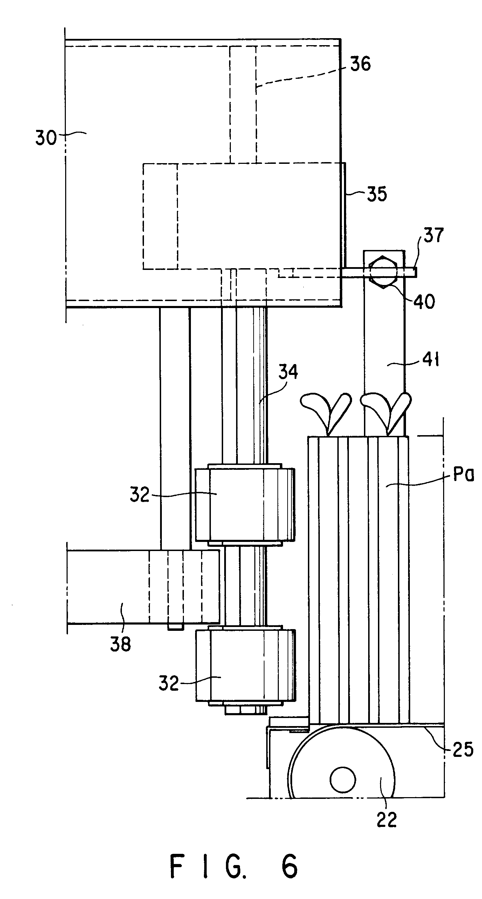

FIG. 6 is a partial enlarged view in which a part of FIG. 31 is cut.

### Best mode for carrying out the Invention

An embodiment of the present invention will be explained with reference to the drawings.

As arranged nursery plants P orderly connected to be separatable into an individual plant Pa, paper cylindrical nursery plants using a paper cylindrical nursery cabinet are shown. If the paper cylindrical nursery cabinet is developed, the shape is hexagonal, and the paper cylinder whose upper and lower are opened is adhered with water soluble paste. If soil is packed into the paper cylinder, seeds are sowed therein, and raising of seedling is performed, the nursery plants are grown and arranged nursery plants are formed in the paper cylinder. Then, its connecting strength is suitably kept for transplanting.

The following will explain a separating apparatus for separating the arranged nursery plants into an individual plant Pb.

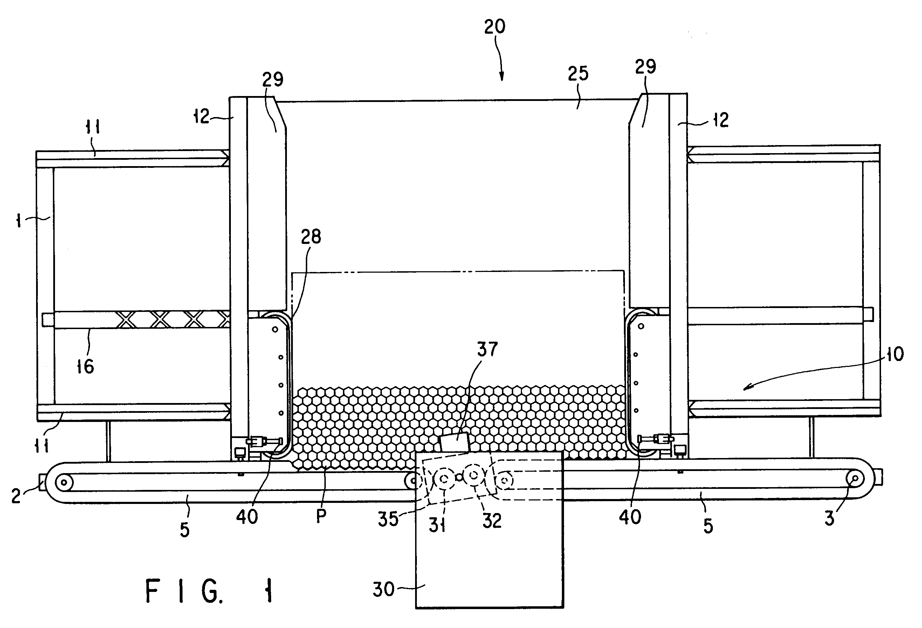

In FIG. 1, reference numeral 1 is a machine casing, and the machine casing 1 is formed of a substantially rectangular frame member. A horizontally moving mechanism 10 is provided on the machine casing 1, and a vertically moving mechanism 20 is further provided on the horizontally moving mechanism 10.

The horizontally moving mechanism 10 comprises a pair of rails 11 formed along the machine casing 1, a pair of horizontally moving mechanism frame 12, which can reciprocate along the rails, and a shaft 16, which is formed at a lower portion of the horizontally moving mechanism frame 12 and a portion between the rails to be parallel to the rails.

A leg portion projecting downward is provided at a corner section of the horizontally moving mechanism frame 12. A guide roller 14 is rotatably provided at the lower end of the leg portion, so that the horizontally moving mechanism frame 12 is movably supported. A cylindrical cam having forward grooves and backward grooves alternately formed is provided in the shaft 16. The cylindrical cam is engaged with a projection (not shown) formed at the lower portion of the horizontally moving mechanism frame 12. Then, by the rotation of the shaft 16, the horizontally moving mechanism frame 12 is designed to continuously reciprocate on the rails.

In the horizontally moving mechanism frame 12 of the horizontally moving mechanism 10, there is provided the vertically moving mechanism 20, which moves in a direction perpendicular to a moving direction Mc of the horizontally moving mechanism 10. The arranged nursery plants P are mounted on a belt 25 of the vertically moving mechanism 20 so as to be intermittently moved in a direction (lower portion of FIG. 1) perpendicular to the moving direction Mc of the horizontally moving mechanism 10 at the end of the movement of the horizontally moving mechanism 10.

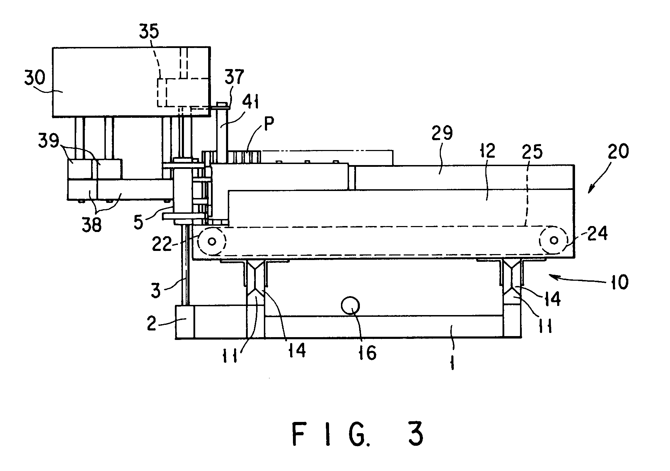

As shown in FIG. 3, in the vertically moving mechanism 20, there is provided a pair of pulleys 22 and 24 extending in parallel with the moving direction Mc. The belt 25 is stretched between the pulleys. The horizontally moving mechanism frame 12 is horizontally moved, and the rotation of the shaft 16 is transmitted to the pulley 22 at only the end of the movement. The belt 25 is moved at the end of the movement of the horizontally moving mechanism 10 to be slightly larger than one row of the arranged nursery plants P.

Reference numeral 2 is a plant control frame, which is formed at the outer portion of the machine frame 1 corresponding to the direction of the movement of the vertically moving mechanism 20 to be parallel to the rails 11. On the frame 2, there is provided a pair of plant control belts 5, which are opposed to each other to be spaced right and left. Each of the plant control belts 5 is rotatably stretched between shafts 3 which are uprightly provided in the plant control frame 2. The side surface of each belt 5, which faces to the side of the arranged nursery plants P, is positioned to be opposite to the final end surface of the belt 25. A pair of separation rotators 31 and 32 to be described later are provided in the space formed between the plant control belts 5, 5 opposite to each other.

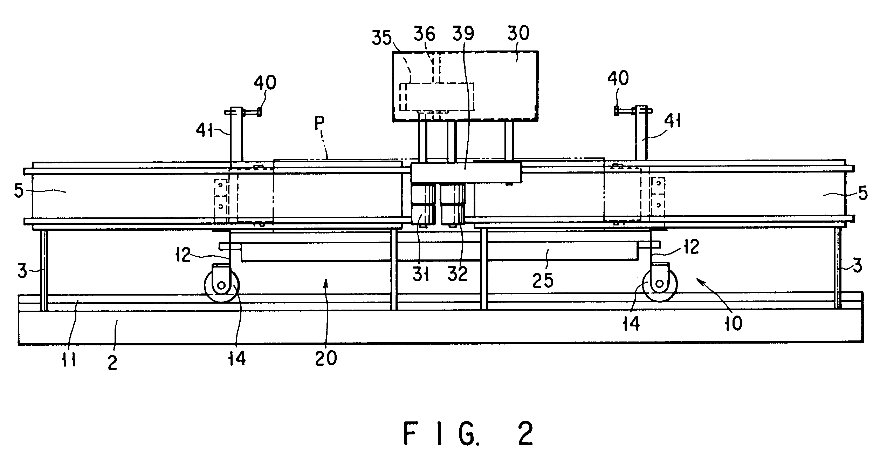

On the side surface of the horizontally moving mechanism frame 12 facing to the plant control belts 5, there are provided upper and lower belt driving pins shown in FIGS. 1 and 2 (no reference numeral) projecting in the direction of the belts 5. The top ends of the respective pins are respectively inserted into holes formed in the belts 5 to be supported, so that the plant control belts 5 are rotated in the same direction together with the reciprocation of the vertically moving mechanism 10.

On the side of the plant control belts 5 on the horizontally vertically moving mechanism frame 12, there are provided a pair of plant side control belts 28 for controlling each of the side surface of the arranged nursery plants P, which are mounted on the belts 25 of the vertically moving mechanisms 20 and moved.

These control belts 28 are stretched on the pulleys, which freely rotate, and rotated not to prevent the movement of the arranged nursery plants P by the belts 25.

Moreover, on the horizontally moving mechanism frame 12, there are provided a pair of plant guiding members 29, which are adjacent to the plant side control belts 28 to be continuous to the belts 28. Similarly, the plant guiding members 29 contact the side surface of the arranged nursery plants P, which are moved on the belts 25, and guide the movement.

Reference numeral 30 is a separating section frame, which is formed at the upper portion of the outside of the machine frame 1 corresponding to the forward of the plant moving direction by the belts 25.

A rotation shaft 36 is inserted into the separation section frame 30, and a separation rotator frame 35 is fixed to the shaft 36 to be rotatable in the horizontal direction. Moreover, an engaging piece 37, which projects to the side of the arranged nursery plants P, is attached to the separation rotator frame 35. As described later, the engaging piece 37 contacts an engaging bolt 40 of an engaging member frame 41, which is provided on the horizontally moving mechanism frame 12. Then, the engaging piece 37 rotates the separation rotator frame 35 to be displaced so as to move the separation rotators 31 and 32 forward and backward, respectively. Moreover, the rotation shaft 36 functions as a power transmission shaft for actuating the separation rotators 31 and 32.

The separation rotators 31 and 32 are attached to a pair of shafts 33 and 34, which project downward from the separation rotator frame 35, to be separated into upper and lower stages, respectively. The separation rotators 31 and 32 contact the upper and lower portions of the side surface of the arranged nursery plants P mounted on the belts 25. The separation space between the separation rotators 31 and 32 is set be slightly narrower than the diameter of the plants P.

Moreover, the separation rotators 31 and 32 are cylindrical rollers whose outer peripheral portions are formed of an elastic member such as a sponge. The separation rotators 31 and 32 are rotated in the opposite direction to each other at the same speed, and their peripheral speed is faster than the moving speed of the horizontally moving mechanism 10. For example, the rotators 31 and 32 are rotated three times faster than the horizontally moving mechanism 10. Moreover, regarding the rotational direction, one separation rotator 31 is rotated clockwise and the other separation rotator 32 is rotated anticlockwise. For separating the plants, the separation rotator, which is positively rotated to the direction of the horizontal movement of the arranged nursery plants P, is placed at the plant separation position, that is, the position contacting the side surface of the plants Pa of the first row the arranged nursery plants P. The separation rotator, which is reversely rotated to the direction of the horizontal movement of the arranged nursery plants P (opposite direction), is placed at the position close to the continuous second row of the plants, that is, the forward of the direction of the horizontal movement of the plants Pa of the first row and the inner side than the separation rotator, which is positively rotated. Then, the distance between the back and front positions of both separation rotators is suitably set in accordance with the thickness of one row of the arranged nursery plants, for example, about 1/2 of the thickness is preferable.

The mechanism for advancing/retracting the separation rotators to/from the above positions in separating the plants are shown in FIGS. 1 to 3.

More specifically, the engaging member frames 41 are uprightly provided to the right and left end portions corresponding to the side the separation section frame 30 of the horizontally moving mechanism frame 12, respectively. Each bolt 40 is projected to upper end portion of each frame 41 at the position opposite to the engaging piece 37 of the separation rotator frame 35.

Therefore, in the plant separating process, at the time when the horizontally moving mechanism frame 12, which reciprocates horizontally, reaches the end of the movement, the top end of the bolt 40 engages with the engage piece 37. Then, the engage piece 37 is pressed, and the separation rotator frame 35 is rotated at a predetermined angle. Thereby, the shafts 33 and 34 provided in the frame 35 are rotated, and the separation rotators 31 and 32, which are formed integrally with these shafts, are moved forward and backward by a predetermined distance.

Moreover, reference numeral 38 is transfer belts 38 formed of a pair of rotating flat belts. The transfer belts 38 are positioned to be adjacent to the separation rotators 31 and 32. Then, the transfer belts 38 receive a plant Pb separated and delivered by the rotator, hold the intermediate portion of the plant Pb, and transfer the plant Pb to the following belts 39. The belts 39 are formed of a pair of flat belts. The belts 39 receive the plant delivered from the final end of the transfer belt 38, hold the upper portion of the plant, and transfer the plant to the following transplanter.

In the above-structured plant separating apparatus, the horizontally moving mechanism frame 12 of the horizontally moving mechanism 10 is mounted on the rails 11 provided in the machine frame 1, and reciprocated in the direction Mc shown in the drawing. Moreover, the belts 25 of the vertically moving mechanism 20 provided on the horizontally moving mechanism 10 are moved, and the arranged nursery plants P mounted on the belts are transferred in the vertical direction. Then, the plants of the first row of the front end is advanced to the position where the plants Pa are adjacent to the plant control belt 5 and the separation rotator 31.

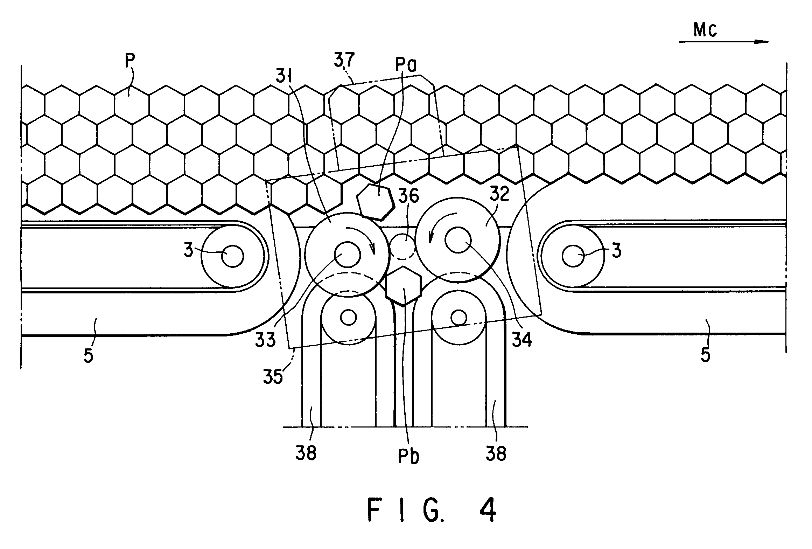

The plant to be separated from the plants Pa of the first row advanced to the above position is pressed and held between the rotator 31 and the continuous second row of the plants shown in FIG. 4. Then, the moving plant is separated from the adjacent plant and the continuous second row of the plants by the rotation of the separation rotator 31, which is positively rotated in the same direction of the moving plant at the higher speed than the moving plant.

The separated plant Pb is further moved to the moving direction. Then, the plant Pb contacts the separation rotator 32, which is positioned at the forward of the moving direction, and which is rotated in the direction opposite to the plant moving direction, is reversely rotated. As a result, the plant Pb is put between the separation rotators 31 and 32, and transferred to the following transfer belts 38 as being held by both rotators 31 and 32.

Even if the plant separation from the plants of the first row by the rotator 31 is not sufficiently performed, the separating plant is positioned at the forward of the moving direction, and contacts the separation rotator 32, which is inclined to the arranged nursery plants P. Thereby, the separating plant is rotated in the direction opposite to the separation rotator 31, and separated from the first row of plants Pa. Therefore, the plants are surely separated into an individual plant without causing any separation mistake.

If the separation of the plants Pa of the first row from the arranged nursery plants P is ended, and the the horizontally moving mechanism frame 12 reaches the end of the movement, the bolt 40, which is projected to the the engaging member frame 41 of the frame 12, contacts the engaging piece 37 of the separation rotator frame 35. Thereby, the rotator frame 35 is rotated, and the positions of the separation rotators 31 and 32 are alternated with each other. At the same time, the belts 25 of the vertically moving mechanism 20 is actuated, and only one row of the arranged nursery plants P is moved in the vertical direction. In this way, the horizontally moving mechanism frame 12 is moved in the horizontal direction opposite to the case of the plants Pa of the first row, so that the plant separation of the next row is sequentially performed.

The plant Pb individually separated by the separation rotator as mentioned above is delivered to the transfer belts 38 through the rotators 31 and 32, and further transferred to the following the transfer belts 39 from the belts 38. Then, finally, the plant Pb is sent to the transplanter, thereby the plant Pb is transplanted to the field.

The above embodiment showed the paper cylindrical nursery plants using the paper cylindrical nursery cabinet as the arranged nursery plants. However, the arranged nursery plants in which soil itself is hardened to be a predetermined shape may be used. Or, inorganic fiber in which raising planting soil is orderly connected, or cylindrical nursery plants formed of high molecular compound may be used. In other words, if the arranged nursery plants P are orderly connected to be separatable into an individual plant Pa, such arranged nursery plants can be used as the arranged nursery plants P of the present invention.

The above embodiment explained that the cylindrical rollers whose outer peripheral portions are formed of an elastic member such as a sponge were used as the pair of the separation rotators. However, one of these rotators or both rotators may be formed of belts. Moreover, regarding the separation rotators, the above embodiment explained that these separation rotators were rotated in the direction opposite to each other at the same speed. However, regarding the rotational speed, there may be a difference between these rotators in speed.

## Claims

1. An apparatus for separating arranged nursery plants comprising a first nursery plant moving mechanism mounting arranged nursery plants orderly connected to be separatable to an individual plant, and being capable of reciprocating in one direction; a second plant nursery plant moving mechanism, provided on said first nursery plant moving mechanism, intermittently moving in a direction perpendicular to the moving direction at an end of the movement of said first nursery plant moving mechanism, and delivering only one row of said arranged nursery plants; and a pair of separation rotators, positioned at a front surface of the moving direction of said second plant moving mechanism to be opposite to the front row of said arranged nursery plants to be delivered, characterized in that one of said separation rotators contacts the plant of the front row of the plants, is positively rotated in a plant moving direction by said first moving mechanism, and rotated at a higher peripheral speed than the moving speed, and the other separation rotator is rotated in a direction opposite to said plant moving direction, and positioned close to a continuous row of the plants.
